(19) Europäisches Patentamt

**European Patent Office**

**Office européen des brevets**

(11) Numéro de publication: **0 194 209**
**B1**

(12) **FASCICULE DE BREVET EUROPEEN**

(45) Date de publication du fascicule du brevet:
**13.07.88**

(21) Numéro de dépôt: **86420016.7**

(22) Date de dépôt: **17.01.86**

(51) Int. Cl.⁴: **E 04 C 2/26, E 04 B 1/60**

(54) **Profilé de chant pour panneaux isothermiques à parements métalliques, et panneaux équipés de ce profilé.**

(30) Priorité: **22.01.85 FR 8501243**

(43) Date de publication de la demande:
**10.09.86 Bulletin 86/37**

(45) Mention de la délivrance du brevet:
**13.07.88 Bulletin 88/28**

(84) Etats contractants désignés:
**AT BE CH DE GB IT LI LU NL SE**

(56) Documents cités:
**FR - A - 2 213 385**
**US - A - 3 367 076**

(73) Titulaire: **TAREC INTERNATIONAL BV, Orionstraat, NL-5500 ST Tilburg (NL)**

(72) Inventeur: **Lamberet, Philippe, Onjard Bage la Ville, F-01380 Bage le Chatel (FR)**
Inventeur: **Robin, Georges, Les Dalles, F-01660 Mezeriat (FR)**

(74) Mandataire: **Maureau, Pierre, Cabinet GERMAIN & MAUREAU B.P. 3011, F-69392 Lyon Cédex 03 (FR)**

## Description

La présente invention concerne un profilé de chant pour panneaux isothermiques à parements métalliques notamment pour chambres froides, et les panneaux équipés de ce profilé.

Ces panneaux isothermiques sont généralement fabriqués par injection, entre leurs parements métalliques entretoisés constituant les deux grandes faces d'un moule, d'une mousse de matière plastique telle que de la mousse de polyuréthane, destinée à former leur âme isothermique.

Pour permettre leur assemblage bout à bout par emboîtement réciproque, les chants de ces panneaux sont généralement moulés avec un profil de section transversale sensiblement en S formant une gorge et une nervure longitudinales disposées côte à côte et aptes à jouer les rôles de tenon et mortaise pour la gorge et la nervure du chant disposé en sens inverse du panneau adjacent.

Il est donc nécessaire de border l'intervalle séparant les parements métalliques, avant l'injection entre eux de l'âme en mousse de matière plastique, avec des longerons de section transversale complémentaire de celles désirées sur les chants. Naturellement, ces longerons devront, avant chaque opération de moulage d'un panneau, être badigeonnés avec un agent améliorant l'état de finition des chants. Cette précaution s'avère d'ailleurs insuffisante car la mousse injectée à tendance à fuir entre les parements et les longerons et cela, malgré la mise en place de rubans adhésifs dont l'efficacité est loin de donner satisfaction. Il en résulte donc, dans les zones d'assemblage des panneaux, des bavures qu'il est nécessaire de supprimer.

Il résulte de la mauvaise finition des chants de ces panneaux non seulement une mauvaise finition de leur assemblage mais aussi une mauvaise tenue et un manque total d'étanchéité. Il est donc nécessaire d'injecter un mastic d'étanchéité entre les panneaux et de déposer aussi un mastic formant couvre-joint.

Par le brevet US 3 367 076, on connaît un panneau isothermique à parements métalliques dont le chant est délimité par un profilé de section transversale générale en S, c'est-à-dire formant, le long de ce chant et disposées côte à côte, une nervure et une gorge destinées à jouer le rôle de tenon et mortaise pour la gorge et la nervure du profilé de chant, disposé en sens inverse, du panneau adjacent. Cependant, dans ce panneau, le profilé de chant est positionné de telle sorte qu'il ne suffit pas à former entièrement, par lui-même, un tenon et une mortaise et que cette formation est complétée par les parements, ce qui nuit à la bonne tenue mécanique de l'assemblage.

En outre, si l'on veut pouvoir fixer de manière solide des accessoires à ce panneau, il est nécessaire de placer des inserts métalliques ou autres entre les parements avant l'injection de l'âme en mousse de matière plastique et de prévoir des moyens de fixation empêchant ces inserts d'être déplacés durant l'injection.

A cet effet, dans le profilé selon l'invention, il est prévu, entre la gorge et la nervure, un repli de section transversale rectangulaire aplatie, orienté en direction de sa face interne de fixation et destiné à servir le logement à un insert métallique constitué par un profilé plat de section correspondante, les deux profilés de chants des deux côtés opposés d'un même panneau étant disposés en sens inverse.

Ce profilé assure donc une parfaite finition non seulement de chants des panneaux mais aussi de leur assemblage. Il présente aussi l'avantage de simplifier considérablement leur fabrication en constituant les faces latérales du moule en remplacement des longerons ce qui non seulement supprime le badigeonnage avec un agent de démoulage et la pose de rubans adhésifs anti-fuites, mais permet aussi de réduire le nombre d'entretoises entre les parements entre les bords desquels ce profilé est placé avant injection de l'âme en pousse de matière plastique. Il présente aussi l'avantage de supprimer la mise en place longue et méticuleuse des inserts avant injection de l'âme.

Pour améliorer l'ancrage au panneau de ce profilé, lors du surmoulage de sa face interne par la mousse constituant l'âme du panneau, suivant une forme d'exécution préférée de l'invention, le fond du repli ménagé entre la gorge et la nervure est bordé, extérieurement, par deux nervures d'orientations divergentes formant cornes d'ancrage.

Pour améliorer encore l'ancrage au panneau de ce profilé en facilitant l'accrochage, sur lui, des bords repliés des parements, suivant une forme d'exécution intéressante de l'invention, d'une part, l'aile bordant la face externe de la nervure présente un repli de section rectangulaire très aplatie, orienté en direction de l'intérieur de cette nervure est destiné à recevoir le bord replie à angle droit du parement métallique correspondant du panneau et, d'autre part, l'aile bordant la face externe de la gorge présente, le long de la face interne de son bord libre, une rainure facilitant le repliage à 180° du bord du parement métallique correspondant du panneau.

Ce profilé, qui assure une parfaite finition aux chants de ces panneaux, est avantageusement réalisé en matière plastique relativement rigide telle que du chlorure de polyvinyle haute densité.

Pour améliorer l'étanchéité de l'assemblage entre panneaux, suivant une forme d'exécution préférée de l'invention, le fond de la gorge longitudinale de ce profilé est muni d'une lèvre souple fixée, par l'un de ses bords, à la paroi de fond de cette gorge et dont le plan médian est légèrement incliné en direction de l'extérieur, cette lèvre venue d'extrusion avec le profilé possédant, dans sa zone d'attache, une faible épaisseur lui procurant la flexibilité nécessaire à sa fonction d'étanchéité.

Suivant une autre caractéristique de l'invention, la branche du repli latéral orientée vers l'intérieur de l'aile du profilé bordant extérieurement la nervure, branche latérale située du côté de cette nervure, est plus courte que son autre branche d'une valeur correspondant sensiblement à l'épaisseur de l'aile de ce même profilé bordant extérieurement la gorge, augmentée du double de l'épaisseur des parements, et le bord libre de cette branche porte une lèvre orientée vers l'extérieur et bordée par un jonc tubulaire, tous deux venus d'extrusion avec le profilé, et destinés à servir de joint de finition entre les parements situés de ce côté de deux panneaux adjacents.

Suivant encore une autre caractéristique de l'invention visant encore à améliorer la tenue de l'assemblage des panneaux, d'une part l'aile bordant la face externe de la gorge présente, sur sa face interne, entre la rainure bordant son bord libre et le fond de la gorge, une ou plusieurs lèvres orientées en direction du fond de la gorge pour former crans d'accrochage du panneau adjacent et, d'autre part, l'aile du profilé bordant extérieurement la nervure porte, au voisinage du bord libre de cette nervure, une denture apte à coopérer avec les lèvres précitées pour améliorer la tenue de l'emboîtement réciproque de deux profilés de chants de deux panneaux assemblés l'un à l'autre.

De toute façon, l'invention sera bien comprise à l'aide de la description qui suit, en référence au dessin schématique annexé représentant, à titre d'exemple non limitatif, une forme d'exécution de ce profilé, équipant un panneau isothermique pour chambre froide:

figure 1 est une vue en coupe transversale de ce profilé seul;

figure 2 est une vue en coupe transversale horizontale de la zone d'assemblage de deux panneaux isothermiques placés bout à bout.

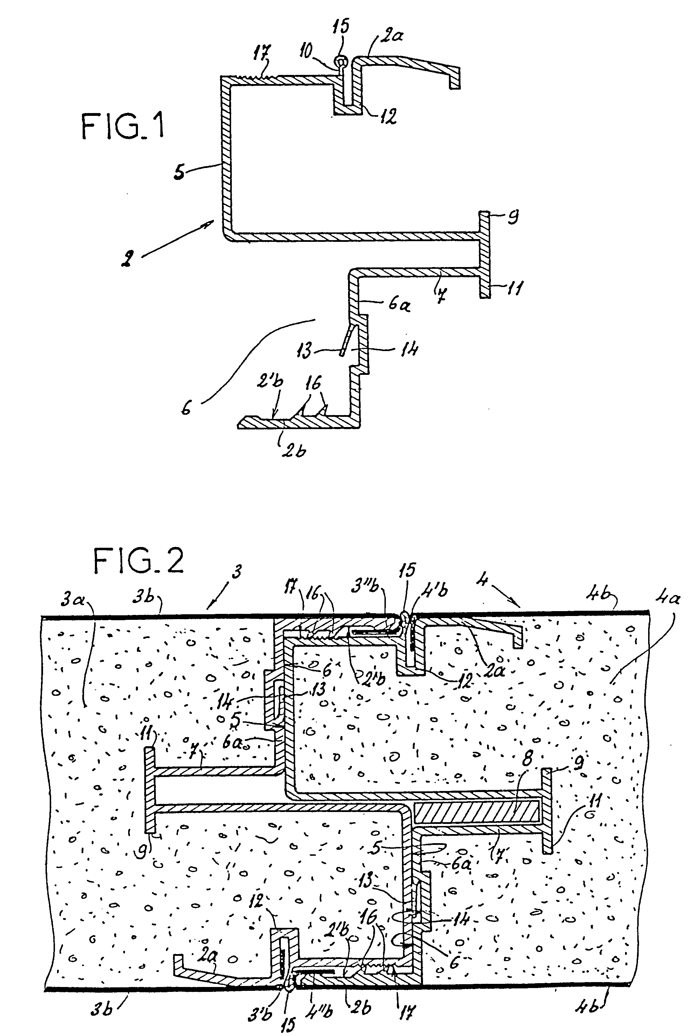

Comme le montre la figure 1, ce profilé (2), destiné à équiper les chants d'assemblage de panneaux isothermiques (3) et (4), présente une section de profil général en S destiné à former, le long de sa face externe c'est-à-dire le long du chant d'assemblage du panneau condiséré (3 ou 4), une nervure (5) et une gorge (6) destinées à jouer le rôle, respectivement, de tenon et mortaise pour la gorge (6) et la nervure (5) du profilé identique (2) disposé en sens inverse sur le chant correspondant du panneau adjacent (4 ou 3). Cette forme générale en S du profilé (2) permet donc un emboîtement réciproque des chants de deux panneaux adjacents (3) et (4).

Entre la nervure (5) est la gorge (6), le profilé (2) présente un repli (7) de section transversale rectangulaire aplatie, orienté en direction de sa face interne de fixation, c'est-à-dire en direction du panneau (3 ou 4) auquel il est assemblé. Ce repli (7) est destiné à permettre la mise en place d'un insert métallique (8) constitué par un profilé plat éventuellement prévu pour l'ancrage d'organes, non représentés sur le dessin, mais devant être fixés aux parois ou suspendus au plafond de la chambre froide réalisée à l'aide de ces panneaux.

Comme le montre le dessin, le fond de ce repli (7) est bordé extérieurement par deux nervures d'orientation opposée (9) et (11) formant cornes d'ancrage du profilé (2) dans l'âme (3a, 4a) en mouse de matière plastique telle que de polyuréthane, injectée entre les deux profilés de chants (2) et les deux parements (3b) et (4b) du panneau (3 ou 4) considéré. Le repli (7) et les cornes d'ancrage (9) et (11) de ce dernier se trouvent en quelque sorte surmoulés par la mousse de matière plastique de l'âme (3a ou 3b) considérée.

Comme le montre encore le dessin, l'aile (2a) du profilé (2) bordant extérieurement la nervure (5) présente un repli (12) de section rectangulaire très aplatie, orienté en direction de l'intérieur de la nervure (5). Ce repli (12) est destiné à recevoir le bord (3'b, 4'b) replié à angle droit du parement métallique (3b ou 4b) situé du même côté du panneau isothermique de manière à assurer non seulement un bon positionnement et un bon ancrage du parement (3b ou 4b) mais également un bon aspect de finition de l'assemblage considéré.

Par ailleurs, l'aile (2b) bordant extérieurement la gorge (6) présente, le long de la face interne de son bord libre, une rainure (2'b) facilitant le repliage à 180° du bord adjacent (3''b ou 4''b) du parement correspondant (3 ou 4).

Comme le montre la figure 2, les deux profilés de chants (2) situés le long de chants à assembler l'un à l'autre des panneaux (3) et (4) sont disposés en sens inverses l'un de l'autre de manière à permettre leur imbrication réciproque, la nervure (5) de l'un pénétrant dans la gorge (6) de l'autre et inversement.

La fabrication des panneaux isothermiques équipés de ces profilés de chants (2) se trouve considérablement simplifiée par rapport à celle des panneaux connus jusqu'alors. En effet, les profilés (2) sont utilisés come faces latérales du moule dans lequel est injectée la mousse de matière plastique constituant l'âme (3a, 4a) du panneau considéré dont les parements métalliques (3b ou 4b) constituent les grandes faces du moule.

Par les engagements de leurs bords repliés (3'b, 4'b) et (3''b, 4''b), respectivement dans les replis (12) et sur les ailes (2b) des profilés (2), les parements (3b) et (4b) sont parfaitement tenus tout le long de leurs chants d'assemblage et il suffit pour les maintenir à l'écartement désiré dans leur zone centrale de placer et fixer un nombre relativement limité d'entretoises. L'engagement précité des bords (3'b, 4'b) et (3''b, 4''b) des parements (3b, 4b) a également pour avantage de permettre leur positionnement correct et rapide par rapport au profilé (2). Enfin, cet engagement a aussi pour effet d'éliminer tout risque de fuite de mousse de matière plastique injectée au niveau des chants d'assemblage sans qu'il soit nécessaire de procéder à la mise en place de rubans adhésifs.

On obtient donc, grâce à ce profilé, des chants de panneaux (3, 4) parfaitement finis et ne présentant aucune bavure.

En choisissant pour matière constitutive des profilés (2) une matière relativement rigide telle que du chlorure de polyvinyle (PVC) haute densité, on obtient en outre un renforcement de la solidité des chants des panneaux, amélioré encore par la liaison entre les profilés (2) et les parements (3b) et (4b) de sorte que l'assemblage ainsi obtenu présente non seulement une meilleure finition mais aussi une bien meilleure solidité que ceux réalisés jusqu'alors, tout en réduisant considérablement les opérations nécessaires à leur injection.

Pour améliorer encore les conditions d'étanchéité de l'assemblage entre panneaux, comme le montre plus particulièrement la figure 1, le fond de la gorge (6) est muni d'une lèvre souple (13) fixée par l'un de ses bords à la paroi de fond (6a) de la gorge (6) et dont le plan médian est légèrement incliné en direction de l'extérieur, c'est-à-dire forme avec la paroi de fond (6a) de la gorge (6) un angle de l'ordre de 15 à 20°. Cette lèvre (13) est évidemment venue d'extrusion avec le profilé (2) et sa souplesse et son élasticité proviennent de sa mince épaisseur. Il en résulte qu'en position d'assemblage de deux panneaux (3) et (4), cette lèvre (13) se trouve rabattue contre le fond de la gorge (6) dans lequel peut être éventuellement aménagé un renforcement (14) permettant l'enfoncement complet de la nervure (5) du panneau (3) dans la gorge (6) du panneau (4), comme illustré sur la figure 2.

L'élasticité propre de la lèvre (13), qui tend à maintenir son bord libre en appui contre la nervure (5) du panneau adjacent, a pour but d'améliorer l'étanchéité de l'assemblage.

Comme le montre plus particulièrement la figure 2, la branche du repli latéral (12) de l'aile (2a) du profilé (2) située du côté de la nervure (5) est plus courte que l'autre d'une longueur correspondant sensiblement à l'épaisseur de l'aile opposée (2b) de ce même profilé, augmentée de deux fois l'épaisseur d'un parement métallique (3b ou 4b). Cette disposition vise à permettre aux parements (3b, 4b) situés d'un même côté de deux panneaux (3) et (4) assemblés d'être situés dans un même plan. En outre, pour améliorer l'esthétique de l'assemblage, le repli latéral (12) de l'aile (2a) du profilé (2) porte, le long de son bord situé du côté de la nervure (5), c'est-à-dire du côté de sa branche la plus courte, une lèvre (10) orientée en direction de l'extérieur et portant, le long de son bord libre, un chant tubulaire (15) auquel la minceur de sa paroi procure la souplesse et l'élasticité nécessaires et suffisantes lui permettant d'être écrasé après assemblage des panneaux entre les bords repliés (4'b, 3''b) ou (3'b, 4''b) des parements (3b) et (4b) qui l'encadrent.

Cette disposition évite l'obligation de la pose, entre les parements (3b, 4b) se correspondant de deux panneaux (3) et (4) assemblés, d'un joint en mastic ou autre produit de finition.

Pour améliorer la tenue de l'assemblage des panneaux (3) et (4), d'une part, l'aile (2b) bordant extérieurement la gorge (6) présente, sur sa face interne, entre la rainure (4''b) et le fond (6a) de la gorge (6), deux lèvres (16) orientées en direction du fond (6a) pour former crans d'accrochage de la nervure (5) du panneau adjacent et, d'autre part, l'aile (2a) bordant extérieurement la nervure (5) porte, au voisinage du bord libre de cette nervure (5), une denture (17) apte à coopérer avec les lèvres (16) précitées, et améliorer ainsi l'emboîtement réciproque des profilés (2) des chants assemblés de deux panneaux (3) et (4).

## Revendications

1. Profilé de chant pour panneaux isothermiques à parements métalliques, présentant une section transversale de profil général en S formant, le long de sa face externe, c'est-à-dire sa face opposée à celle par laquelle il est assemblé à un chant de panneau (3), et disposées côte à côte, une nervure (5) et une gorge (6) destinées à jouer le rôle de tenon et mortaise pour la gorge (6) et la nervure (5) du profilé de chant (2), disposé en sens inverse, du panneau adjacent (4), caractérisé en ce qu'entre cette gorge (6) et cette nervure (5) est formé un repli (7) de section transversale rectangulaire aplatie, orienté en direction de sa face interne de fixation et destiné à servir de logement à un insert métallique (8) constitué par un profilé plat de section correspondante, les deux profilés de chants (2) de deux côtés opposés d'un même panneau (3, 4) étant disposés en sens inverse.

2. Profilé de chant selon la revendication 1, caractérisé en ce que le fond du repli (7) ménagé entre la gorge (6) et la nervure (5) est bordé, extérieurement, par deux nervures (9, 11) d'orientations divergentes formant cornes d'ancrage.

3. Profilé de chant selon la revendication 1 ou la revendication 2, caractérisé en ce que l'aile (2a) bordant la face externe de la nervure (5) présente un repli (12) de section rectangulaire très aplatie, orienté en direction de l'intérieur de cette nervure (5) et destiné à recevoir le bord replié à angle droit (3''b, 4'b) du parement métallique (3b, 4b) correspondant du panneau (3, 4).

4. Profilé de chant selon l'une quelconque des revendications 1 à 3, caractérisé en ce que l'aile (2b) bordant la face externe de la gorge (6) présente, le long de la face interne de son bord libre, une rainure (2'b) facilitant le repliage à 180° du bord (3''b, 4''b) du parement métallique (3b, 4b) correspondant du panneau (3, 4).

5. Profilé de chant selon l'une quelconque des revendications précédentes, caractérisé en ce que le fond (6a) de sa gorge longitudinale (6) est muni d'une lèvre souple (13) fixée, par l'un de ses bords, à la paroi de fond (6a) de cette gorge (6) et dont le plan médian est légèrement incliné en direction de l'extérieur, cette lèvre (13) venue d'extrusion avec le profilé (2) possédant, au moins dans sa zone d'attache, une faible épaisseur lui procurant la flexibilité nécessaire à sa fonction d'étanchéité.

6. Profilé de chant selon la revendication 3, caractérisé en ce que la branche du repli latéral (12) orientée vers l'intérieur de l'aile (2a) du profilé (2) bordant extérieurement la nervure (5), branche latérale située du côté de cette nervure, est plus courte que son autre branche d'une valeur correspondant sensiblement à l'épaisseur de l'aile (2b) de ce même profilé (2) bordant extérieurement la gorge (6), augmentée du double de l'épaisseur des parements (3b, 4b) et le bord libre de cette branche porte une lèvre (10) orientée vers l'extérieur et bordée par un jonc tubulaire (15), tous deux venus d'extrusion avec le profilé (2) et destinés à servir de joint de finition entre les parements (3b, 4b) situés de ce côté de deux panneaux adjacents (3, 4).

7. Profilé de chant selon l'une quelconque des revendications 1 à 6, caractérisé en ce que, d'une part, l'aile (2b) bordant la face externe de la gorge (6) présente, sur sa face interne, entre la rainure (2'b) bordant son bord libre et le fond de la gorge (6), une ou plusieurs lèvres (16) orientées en direction du fond (6a) de la gorge (6) pour former crans d'accrochage du panneau adjacent (3, 4) et, d'autre part, l'aile (2a) du profilé bordant extérieurement la nervure (5) porte, au voisinage du bord libre de cette nervure (5), une denture (17) apte à coopérer avec les lèvres (16) précitées pour améliorer la tenue de l'emboîtement réciproque de deux profilés de chants (2) de deux panneaux (3, 4) assemblés l'un à l'autre.

8. Panneau isothermique à parements métalliques pour chambres froides ou similaires, caractérisé en ce que ses chants d'assemblage sont équipés de profilé de chant selon l'une quelconque des revendications 1 à 7, disposés en sens inverse l'un par rapport à l'autre.

**Patentansprüche**

1. Kantenprofil für isothermische Platten mit metallischen Aussenwänden, mit einem im allgemeinen S-förmigen Querschnittsprofil, welches entlang seiner Aussenseite, d.h. der Seite, die derjenigen abgewandt ist, mit der es an einer Kante der Platte (3) befestigt ist, nebeneinanderliegend eine Rippe (5) und eine Rinne (6) bildet, die jeweils als Feder und Nut für die Rinne (6) und die Rippe (5) des gegensinnig angeordneten Kantenprofils (2) der benachbarten Platte (4) dienen, dadurch gekennzeichnet, dass zwischen der Rinne (6) und der Rippe (5) eine Einstülpung (7) mit flachem, rechteckigem Querschnitt gebildet ist, die in Richtung seiner Befestigungsinnenseite gerichtet ist und zur Aufnahme einer metallischen, von einem flachen Profil entsprechenden Querschnittes gebildeten Einlage (8) dient, wobei die beiden Kantenprofile (2) der beiden einander abgewandten Seiten einer Platte (3, 4) gegensinnig angeordnet sind.

2. Kantenprofil nach Anspruch 1, dadurch gekennzeichnet, dass der Boden der zwischen der Rinne (6) und der Rippe (5) angeordneten Einstülpung (7) an seiner Aussenseite von zwei Stegen (9, 11) gesäumt ist, die in verschiedene Richtungen orientiert sind und Verankerungshörner bilden.

3. Kantenprofil nach Anspruch 1 oder 2, dadurch gekennzeichnet, dass der die Aussenseite der Rippe (5) säumende Schenkel (2a) eine Einstülpung (12) mit sehr flachem, rechteckigem Querschnitt aufweist, die zum Inneren der Rippe (5) hin ausgerichtet ist und dazu dient, den rechtwinklig abgebogenen Rand (3'b, 4'b) der zugeordneten metallischen Aussenwand der Platte (3, 4) aufzunehmen.

4. Kantenprofil nach einem der Ansprüche 1 bis 3, dadurch gekennzeichnet, dass der die Aussenseite der Rinne (6) säumende Schenkel (2b) entlang der Innenseite seiner freien Kante eine Nut (2'b) aufweist, die die Rückfaltung der Kante (3''b, 4''b) der zugeordneten metallischen Aussenwand (3b, 4b) der Platte (3, 4) um 180° ermöglicht.

5. Kantenprofil nach einem der vorstehenden Ansprüche, dadurch gekennzeichnet, dass der Boden (6a) der längsverlaufenden Rinne (6) mit einer weichen Lippe (13) versehen ist, die mit einer ihrer Seitenkanten an der Bodenwand (6a) der Rinne (6) befestigt ist und deren Mittelebene leicht nach aussen geneigt ist, wobei die durch Extrusion zusammen mit dem Kantenprofil (2) gebildete Lippe (13) wenigstens im Befestigungsbereich eine geringe Dicke aufweist, die ihr die für ihre Dichtungsaufgabe erforderliche Biegsamkeit gibt.

6. Kantenprofil nach Anspruch 3, dadurch gekennzeichnet, dass der Seitenschenkel der Einstülpung (12), welcher von dem die Rippe (5) aussen säumenden Schenkel (2a) des Kantenprofils (2) nach innen gerichtet ist und sich an die Rippe (5) anschliesst, kürzer als deren äusserer Schenkel ist, und zwar um einen Betrag, welcher im wesentlichen der Dicke des die Rinne (6) aussen säumenden Schenkels (2b) des gleichen Kantenprofils (2) gleich ist, vermehrt um das Doppelte der Dicke der Aussenwände (3b, 4b), und dass der freie Rand dieses Schenkels eine nach aussen gerichtete und von einem Rohrprofil (15) gesäumte Lippe (10) trägt, wobei beide durch Extrusion zusammen mit dem Kantenprofil (2) gebildet werden und dazu bestimmt sind, als Abschlussverbindung zwischen den an dieser Seite gelegenen Aussenwänden (3b, 4b) zweier benachbarter Platten (3, 4) zu dienen.

7. Kantenprofil nach einem der Ansprüche 1 bis 6, dadurch gekennzeichnet, dass einerseits der die Aussenseite der Rinne (6) säumende Schenkel (2b) auf seiner Innenseite zwischen der Nut (2'b), die seinen freien Rand säumt, und dem Boden der Rinne (6) eine oder mehrere Lippen (16) trägt, die in Richtung zum Boden (6a) der Rinne (6) hin ausgerichtet sind und Rasthaken für die benachbarte Platte (3, 4) bilden, und dass andererseits der die Aussenseite der Rippe (5) säumende Schenkel (2a) des Kantenprofils in der Nähe des freien Randes dieser Rippe (5) eine Zahnung (17) aufweist, die mit den genannten Lippen (16) zusammenwirkt, um die gegenseitige Flügelverbindung der beiden Kantenprofile (2) der beiden miteinander verbundenen Platten zu verbessern.

8. Isothermische Platte mit metallischen Aussenwänden für Kühlräume oder dergleichen, dadurch gekennzeichnet, dass die Verbindungskanten mit Kantenprofilen gemäss einem der Ansprüche 1 bis 7 versehen sind, die zueinander gegensinnig angeordnet sind.

**Claims**

1. An edge profile for insulating panels with metal facings, having a generally S-shaped transverse section forming, along its external face, that is to say its face opposed to that by which it is assembled to a panel edge (3), and disposed side-by-side, a rib (5) and a groove (6) intended to act as a tenon and mortise joint for the groove (6) and the rib (5) of the edge profile (2), disposed in the inverse direction, of the adjacent panel (4), characterised in that between this groove (6) and rib (5) is formed a convolution (7) having a flattened rectangular transverse section, oriented in the direction of its internal fixing surface and intended to serve as a housing for a metal insert (8) constituted by a flat profile having a corresponding section, the two edge profiles (2) of the two opposed sides of one panel (3, 4) being disposed in inverse directions.

2. An edge profile according to Claim 1, characterised in that the base of the convolution (7) formed between the groove (6) and the rib (5) is externally edged by two ribs (9, 11) in diverging directions forming anchoring spurs.

3. An edge profile according to Claim 1 or Claim 2, characterised in that the wing (2a) edging the external surface of the rib (5) has a convulation (12) having a very flattened rectangular section, directed towards the interior of said rib (5) and intended to receive the edge (3'b, 4'b), turned back at a right-angle, of the corresponding metal facing (3b, 4b) of the panel (3, 4).

4. An edge profile according to any one of Claims 1 to 3, characterised in that the wing (2b) edging the external surface of the groove (6) has, along the internal surface of its free edge, a groove (2'b) to facilitate the folding back at 180° of the edge (3''b, 4''b) of the corresponding metal facing (3b, 4b) of the panel (3, 4).

5. An edge profile according to any one of the preceding claims, characterised in that the base (6a) of its longitudinal groove (6) is provided with a flexible tongue (13) attached by one of its edges to the bottom wall (6a) of said groove (6) and of which the medial plane is slightly inclined towards the exterior, said tongue (13), which is produced by extrusion with the profile (2) having, at least in the area in which it is attached, a small thickness which ensures it the necessary flexibility to achieve its sealing function.

6. An edge profile according to Claim 3, characterised in that the arm of the lateral convolution (12) directed toward the interior of the wing (2a) of the profile (2) externally edging the rib (5), which lateral arm is located at the side adjacent said rib, is shorter than its other arm by an amount substantially corresponding to the thickness of the wing (2b) of this same profile (2) externally edging the groove (6), increasing by double the thickness of the facing (3b, 4b), and the free edge of this arm carries a tongue (10) directed towards the exterior and edged by a tubular formation (15), both produced by extrusion with the profile (2) and intended to act as a finishing joint between the facings (3b, 4b) located on this side of the two adjacent panels (3, 4).

7. An edge profile according to any one of Claims 1 to 6, characterised in that, on the one hand, the wing (2b) edging the external face of the groove (6) has, on its internal surface, between the groove (2'b) along its free edge and the base of the groove (6), one or more tongues (16) directed towards the base (6a) of the groove (6) to form attachment teeth for the adjacent panel (3, 4) and, on the other hand, the wing (2a) of the profile externally edging the rib (5) has, in the vicinity of the free edge of said rib (5), toothing (17) adapted to co-operate with the aforementioned tongues (16) to improve the firmness of the reciprocal interlocking of the two edge profiles (2) of two panels (3, 4) assembled together.

8. An insulating panel having metal facings, for cold rooms or the like, characterised in that its assembly edges are provided with edge profiles according to any one of claims 1 to 7, arranged in inverse directions with respect to one another.

FIG.1

FIG.2